# EUROPÄISCHE PATENTSCHRIFT

(11) **EP 3 285 904 B1**
(45) Veröffentlichungstag und Bekanntmachung des Hinweises auf die Patenterteilung: **05.06.2019**
(21) Anmeldenummer: 16716189.2
(22) Anmeldetag: 07.04.2016
(51) Int. Cl.: B01D 35/153, B01D 35/16

(54) **FILTEREINRICHTUNG**
FILTER DEVICE
DISPOSITIF DE FILTRATION

(30) Priorität: 21.04.2015 DE 102015207231
(43) Veröffentlichungstag der Anmeldung: 28.02.2018
(60) Teilanmeldung: 18154205.1
(73) Patentinhaber: MAHLE International GmbH, 70376 Stuttgart (DE)
(72) Erfinder: KOLLMANN, Andreas, 9421 Eitweg (AT); MERT, Stephan, 9143 St. Michael (AT); SUTSCHITSCH, Hannes, 9141 Eberndorf (AT)
(74) Vertreter: BRP Renaud & Partner mbB Rechtsanwälte Patentanwälte Steuerberater
(86) Internationale Anmeldenummer: PCT/EP2016/057600
(87) Internationale Veröffentlichungsnummer: WO 2016/169775

(56) Entgegenhaltungen:
- WO-A1-01/10533
- WO-A1-2005/123216
- DE-A1- 3 903 675
- DE-A1- 19 904 981
- DE-A1-102009 024 699

## Beschreibung

Die vorliegende Erfindung betrifft eine Filtereinrichtung mit einem einen Filtergehäusetopf und einen damit verschraubbaren Deckel aufweisenden Gehäuse gemäß dem Oberbegriff des Anspruchs 1. Die Erfindung betrifft außerdem ein Ringfilterelement für eine solche Filtereinrichtung.

Gattungsgemäße Filtereinrichtungen sind hinlänglich und mannigfaltig bekannt.

Aus der DE 197 07 132 A1 ist eine Filtereinrichtung mit einem einen Filtergehäusetopf und einen damit verschraubbaren Deckel aufweisenden Gehäuse sowie wie mit einem darin angeordneten Ringfilterelement bekannt, wobei wenigstens ein Rastmittel vorgesehen ist, mittels dem eine lösbare Rastverbindung zwischen Filterelement und wenigstem einem der Gehäuseteile herstellbar ist. Hierdurch soll es insbesondere ermöglicht werden, ein Filterelement einfacher zu montieren bzw. zu demontieren ohne dabei in direktem Kontakt mit dem Filterelement treten zu müssen.

Aus der DE 10 2012 00 876 C5 ist ein Flüssigkeitsfilter einer Brennkraftmaschine mit einem Filtergehäuse bekannt, das mit einem Flüssigkeitsleitungssystem verbunden ist. Ein Gehäusetopf ist dabei über eine Gehäuse-Deckel-Verbindung mit einem Gehäusedeckel verbunden, wobei diese Verbindung mittels einer Gehäusedrehbewegung des Gehäusetopfs relativ zum Gehäusedeckel um eine gedachte Montageachse verriegelt und entriegelt werden kann. Ein Filterelement ist über eine Element-Deckel-Verbindung mit dem Gehäusedeckel verbunden. Die beiden Verbindungen sind dabei derart aufeinander abgestimmt, dass bei einer Drehbewegung des Gehäusetopfes relativ zum Gehäusedeckel zum Öffnen oder Schließen der dortigen Verbindung, diese Drehbewegung mittels der Element-Gehäuse-Verbindung auf das Filterelement übertragen wird, so dass das Filterelement gemeinsam mit dem Gehäusetopf relativ zum Gehäusedeckel gedreht werden kann. Da die Schließrichtung der Gehäuse-Deckel-Verbindung der Öffnungsrichtung der Element-Deckel-Verbindung entspricht, kann beim Verriegeln der Gehäuse-Deckel-Verbindung automatisch die Element-Deckel-Verbindung entriegelt werden, sofern diese vorher verriegelt war. Hierdurch soll insbesondere auch ein Ressourcen schonender Filterelementwechsel ermöglicht werden.

Aus der DE 10 2008 011 616 A1 ist ein Filtergehäuse bekannt, welches sich entlang einer Längsachse erstreckt und zwei lösbar miteinander verbundene Gehäuseteile umfasst. Die Verbindung der beiden Gehäuseteile ist durch Drehung des einen Gehäuseteils in eine Drehrichtung um die Längsachse relativ zum anderen Gehäuseteil lösbar. Darüber hinaus ist eine Drehsicherung für die beiden Gehäuseteile gegeneinander vorgesehen, mit einem Betätigungshebel, der zusammen mit seiner Hebelachse einteilig und materialeinheitlich mit einer Wand eines der beiden Gehäuseteile ausgeführt ist. Hierdurch soll es möglich sein, den Deckel leichter zu montieren bzw. zu demontieren.

Bei Kraftstoff- bzw. Schmierstofffiltersystemen entstehen insbesondere bei großen Ringfilterelementen, wie beispielsweise bei Nutzfahrzeugfiltern, starke Reibungskräfte zwischen Dichtringen und Dichtflächen. Durch das Quellen der Dichtringe während des Betriebs der Filtersysteme können diese Kräfte zusätzlich verstärkt werden. Hierdurch kann es im Servicefall dazu kommen, dass die klassischen Haltekräfte einer Clipverbindung zwischen einem Deckel und dem Ringfilterelement nicht ausreichen, letzteres beim Lösen des Deckels mit aus dem Filtergehäusetopf herauszuziehen, so dass es in diesem verbleibt und umständlich aus diesem entfernt werden muss.

Die vorliegende Erfindung beschäftigt sich daher mit dem Problem, für eine Filtereinrichtung der gattungsgemäßen Art eine verbesserte oder zumindest eine alternative Ausführungsform anzugeben, die insbesondere wartungsfreundlicher ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine neue Verbindung zwischen einem Deckel eines Gehäuses einer Filtereinrichtung und einem Ringfilterelement zu verwenden, welche beim Servicefall genügend Kraft übertragen kann, um das Ringfilterelement aus einem Filtergehäusetopf herausziehen zu können und zwar selbst dann, wenn Dichtungen nach einem längeren Betrieb aufgequollen und daher erhöhte Entnahmekräfte erforderlich sind. Die erfindungsgemäße Filtereinrichtung weist dabei ein Gehäuse mit einem Filtergehäusetopf und einem damit verschraubbaren Deckel auf, sowie ein in dem Gehäuse angeordnetes Ringfilterelement mit einem von einer unteren Endscheibe axial abstehenden Pin zum Verschließen eines Leerlaufkanals. Das Ringfilterelement selbst ist über ein erstes Gewinde mit dem Deckel verbunden, wobei dieses erste Gewinde einen von einer oberen Endscheibe des Ringfilterelements zentrisch und axial abstehenden Dom mit einem durch Freigänge unterbrochenen Außengewinde und an dem Deckel axial abstehend und hohlzylindrisch angeordnete Federelemente umfasst, wobei an den Federelementen jeweils ein komplementär zum Außengewinde ausgebildeter Innengewindeabschnitt angeordnet ist. Jeder dieser Innengewindeabschnitte erstreckt sich dabei über einen längeren Umfangsabschnitt als einer der Freigänge. Darüber hinaus ist das erste Gewinde gegenläufig zu einem zwischen dem Filtergehäusetopf und dem Deckel angeordneten zweiten Gewinde ausgebildet. Mit dem erfindungsgemäß ausgebildeten Gewinde zwischen dem Deckel und dem Ringfilterelement ist es besonders einfach, auch vergleichsweise große Ringfilterelemente, beispielsweise in Nutzfahrzeugen, zu montieren bzw. zu demontieren. Bei einer Montage wird dabei zunächst das Ringfilterelement im Deckel verschraubt, wobei dieses Verschrauben aufgrund der im Außengewinde des Ringfilterelementes vorgesehenen Freigänge mit wenigen Drehbewegungen möglich ist. Anschließend kann die so vormontierte Baugruppe mit dem Filtergehäusetopf verschraubt werden, wobei beispielsweise eine an einer Stirnseite des Doms angeordnete Mitnehmergeometrie mit einer deckelseitigen Gegenmitnehmergeometrie derart zusammenwirkt, dass das Ringfilterelement beim Montieren des Deckels, das heißt beim Aufschrauben auf den Filtergehäusetopf solange mitdreht, bis der Pin in den Leerlaufkanal eingreift. Ab diesem Zeitpunkt wird das Ringfilterelement an einer weiteren Drehbewegung gehindert und durch den Deckel weiter in den Filtergehäusetopf nach unten gedrückt, bis das zweite Gewinde vollständig festgeschraubt ist und der Pin vollständig und dicht in den Leerlaufkanal eingreift.

Eine Demontage des Deckels samt Ringfilterelement erfolgt nun derart, dass der Deckel in gewohnter Weise vom Filtergehäusetopf abgeschraubt wird, wobei das Ringfilterelement zunächst mit seinem Pin im Leerlaufkanal verbleibt und dadurch nicht mit dem Deckel mitdreht. Durch die keilförmig ausgebildeten Gewindegänge sowohl am Innengewindeabschnitt als auch am Außengewinde kann nun das Ringfilterelement aufgrund der gegenläufigen Steigung des ersten Gewindes relativ zum zweiten Gewinde hochgezogen und damit der Pin aus dem Leerlaufkanal herausgezogen werden.

Alternativ kann selbstverständlich auch zunächst das Ringfilterelement in den Filtergehäusetopf eingesetzt und anschließend der Deckel aufgeschraubt werden. Hierbei gleiten ebenfalls die Innengewindeabschnitte über ihre Gleitschrägen entlang der Gleitschrägen des Außengewindes, wobei eine korrekte Positionierung des Pins relativ zum Leerlaufkanal nunmehr nicht ausschließlich über die Mitnehmergeometrie, sondern zudem auch über die Innengewindeabschnitte der Federelemente erreicht wird. Nach dem Eingreifen des Pins in den Leerlaufkanal kann durch die erfindungsgemäße Ausbildung des ersten Gewindes und insbesondere der an dem Deckel axial abstehenden und hohlzylindrisch angeordneten Federelemente erreicht werden, dass diese über die Gewindegänge des Außengewindes am Ringfilterelement gleiten, wofür sowohl am Außengewinde als auch an den Innengewindeabschnitten der Federelemente Gleitschrägen angeordnet sind. Über diese Gleitschrägen/Gleitflächen wird der jeweilige Innengewindeabschnitt eines Federelements solange bewegt, bis er über das Außengewinde geführt ist und wieder elastisch nach innen zurückschnappt und damit das Außengewinde am Dom des Ringfilterelements hintergreift.

Von besonderem Vorteil bei der erfindungsgemäßen Filtereinrichtung ist, dass eine Montage des Ringfilterelements in der Filtereinrichtung unabhängig von den beiden Alternativen vergleichsweise einfach und ohne größeren Kraftaufwand möglich ist. In gleicher Weise einfach gestaltet sich auch eine Demontage des Ringfilterelements, da die Innengewindeabschnitte in der Lage sind, hohe Kräfte in Axialrichtung auf das Ringfilterelement zu übertragen.

Bei einer weiteren vorteilhaften Ausführungsform der erfindungsgemäßen Lösung sind insgesamt acht Federelemente mit jeweils einem Innengewindeabschnitt vorgesehen. Zusätzlich oder alternativ kann das Außengewinde insgesamt sechs Freigänge aufweisen. Diese spezielle Ausführungsform des Außengewindes und der Innengewindeabschnitt ermöglicht sowohl eine zuverlässige und einfache Montage als auch eine in gleicher Weise zuverlässige und einfache Demontage, bei welcher auf jeden Fall sichergestellt werden kann, dass selbst bei gequollenen Dichtungen und damit hohen Haltekräften zwischen dem Ringfilterelement und dem Filtergehäusetopf, das Ringfilterelement sicher aus dem Filtergehäusetopf herausgezogen werden kann.

Zweckmäßig sind der Dom und das Außengewinde mit seinen Freigängen einstückig mit der oberen Endscheibe ausgebildet. Hier bietet es sich an, die obere Endscheibe zusammen mit dem Dom und dem Außengewinde als kostengünstiges Kunststoffspritzgussteil auszubilden, wobei selbstverständlich in gleicher Weise auch die untere Endscheibe zusammen mit dem Pin als kostengünstiges, einstückiges Kunststoffspritzgussteil ausgebildet sein kann.

Die vorliegende Erfindung beruht weiter auf dem allgemeinen Gedanken, ein Ringfilterelement für eine solche zuvor beschriebene Filtereinrichtung anzugeben, mit einem von einer unteren Endscheibe axial abstehenden Pin zum Verschließen einen Leerlaufkanals sowie mit einem von einer oberen Endscheibe zentrisch axial abstehenden Dom mit einem durch Freigänge unterbrochenen Außengewinde. Durch die spezielle Ausgestaltung der Innengewindeabschnitt und des Außengewindes kann auch eine Art Schlüssel-Schloss-Prinzip verwirklicht werden, welches den Einsatz eines autorisierten Ringfilterelements erzwingt, wodurch insbesondere eine langfristig erstklassige Filterleistung gewährleistet werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine teilweise geschnittene Ansicht auf eine erfindungsgemäße Filtereinrichtung,
- Fig. 2: eine Detaildarstellung aus dem Bereich eines ersten Gewindes,
- Fig. 3: eine ebenfalls teilweise geschnittene Ansicht der Filtereinrichtung,
- Fig. 4: eine Schnittdarstellung durch die Filtereinrichtung im Bereich des ersten Gewindes,
- Fig. 5: links eine Ansicht auf das erste Gewinde, rechts eine Darstellung wie links, jedoch ohne Ringfilterelement.

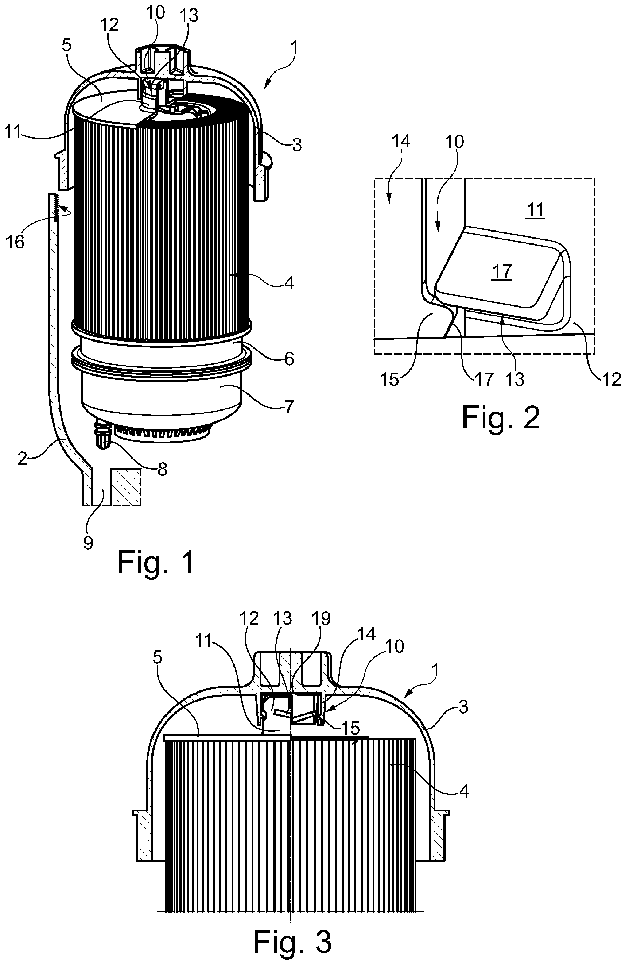

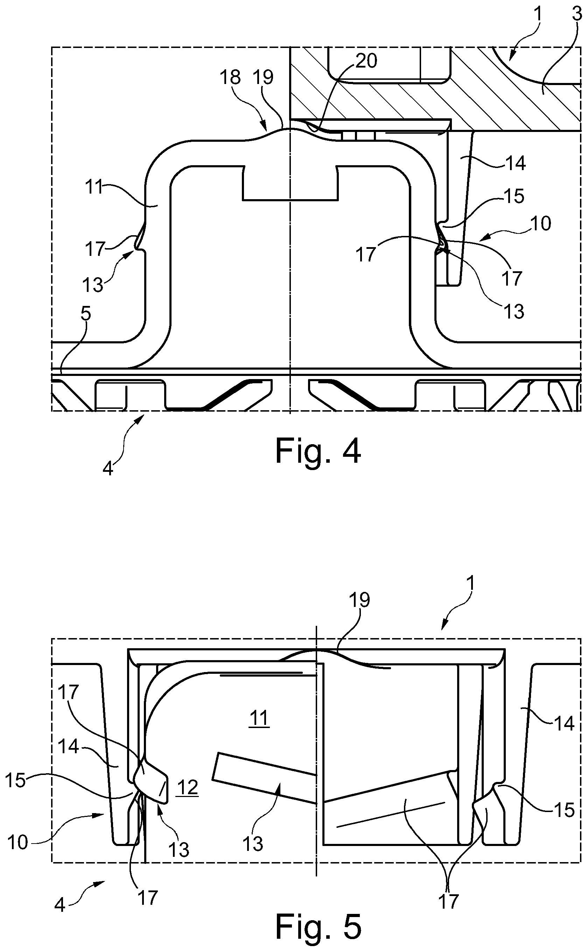

Entsprechend der Fig. 1, weist eine erfindungsgemäße Filtereinrichtung 1, welche beispielsweise als Kraftstoff- oder als Schmierstofffilter in einem Nutzfahrzeug ausgebildet sein kann, einen Filtergehäusetopf 2 sowie einen damit verschraubbaren Deckel 3 (vgl. auch die Fig. 3 und 4) und ein darin angeordnetes Ringfilterelement 4 auf. Das Ringfilterelement 4 weist eine obere Endscheibe 5 sowie eine untere Endscheibe 6 auf, wobei an der unteren Endscheibe 6 ein Wassersammelraum 7 mit einem axial abstehenden Pin 8 angeordnet ist. Dieser greift bei montierter Filtereinrichtung 1 in einen Leerlaufkanal 9 ein und verschließt diesen. Erfindungsgemäß ist nun das Ringfilterelement 4 über ein erstes Gewinde 10 mit dem Deckel 3 verbunden. Das erste Gewinde 10 wird dabei gebildet durch einen von der oberen Endscheibe 5 des Ringfilterelements 4 zentrisch axial abstehenden Dom 11 (vgl. auch die Fig. 2 bis 5) mit einem durch Freigänge 12 unterbrochenen Außengewinde 13 und von an dem Deckel 3 axial abstehenden und hohlzylindrisch angeordneten Federelementen 14, an denen jeweils ein komplementär zum Außengewinde 13 ausgebildeter Innengewindeabschnitt 15 angeordnet ist. Dabei erstreckt sich jeder der Innengewindeabschnitte 15 über einen längeren Umfangsabschnitt, das heißt über einen längeren Kreissegmentabschnitt, als ein Freigang 12. Darüber hinaus ist das erste Gewinde 10 gegenläufig zu einem zwischen dem Filtergehäusetopf 2 und dem Deckel 3 angeordneten zweiten Gewinde 16 ausgebildet.

Betrachtet man sowohl das Außengewinde 13 als auch die zugehörigen Innengewindeabschnitte 15, so kann man erkennen, dass diese keilförmig ausgebildet sind und jeweils eine Gleitfläche 17 aufweisen, auf deren Bedeutung nachfolgend noch eingegangen wird. Die Federelemente 14 ermöglichen aufgrund ihrer zumindest geringfügigen radialen Elastizität auch ein Einstecken des Ringfilterelements 4 in den Deckel 3, bei welchem das Außengewinde 13 über seine Gleitfläche 17 den zugehörigen Innengewindeabschnitt 15 über dessen Gleitfläche 17 nach außen verstellt, bis das Außengewinde 13 den Innengewindeabschnitt 15 hintergreift und dadurch das Federelement 14 radial nach innen zurückfedert.

Dabei sind zumindest zwei Federelemente 14 und zwei Freigänge 12 vorgesehen. Vorzugsweise sind insgesamt acht Federelemente 14 mit jeweils einem Innengewindeabschnitt 15 vorgesehen. Darüber hinaus weist das Außengewinde 13 insgesamt sechs Freigänge 12 auf. Dies bietet den besonderen Vorteil, eine einfache Montage des Ringfilterelements 4 in der Filtereinrichtung 1 und ebenso auch eine zuverlässige Demontage desselben zu ermöglichen.

Der Dom 11 und das Außengewinde 13 mit seinen Freigängen 12 sind dabei vorzugsweise einstückig mit der oberen Endscheibe 5 ausgebildet, so dass diese in einem einzigen Herstellungsschritt fertigungstechnisch einfach und kostengünstig als Kunststoffspritzgussteil hergestellt werden kann. Das erste Gewinde 10 ist dabei vorzugsweise als Linksgewinde ausgebildet, wogegen das zweite Gewinde 16 dann als Rechtsgewinde ausgebildet ist. Selbstverständlich ist auch eine umgekehrte Ausführungsform denkbar.

Betrachtet man die Fig. 4 und 5, so kann man erkennen, dass an einer Stirnseite 18 des Doms 11 eine Mitnehmergeometrie 19 angeordnet ist, die mit einer am Deckel 3 angeordneten Gegenmitnehmergeometrie 20 derart zusammenwirkt, dass das Ringfilterelement 4 beim Montieren des Deckels 3 solange mitgedreht wird, bis der Pin 8 in den Leerlaufkanal 9 eingreift.

Generell gestaltet sich die Montage des Ringfilterelements 4 in der Filtereinrichtung 1 wie folgt:
Zunächst kann das Ringfilterelement 4 mit seinem Dom 11 über das erste Gewinde 10 mit dem Deckel 3 verschraubt werden, was auf Grund der Freigänge 12 mit wenig Kraftaufwand und geringen Drehbewegungen möglich ist. Anschließend wird die derart vormontierte Baugruppe in den Filtergehäusetopf 2 eingesetzt und dabei der Deckel 3 mit dem Filtergehäusetopf 2 verschraubt. Da das erste Gewinde 10 gegenläufig zum zweiten Gewinde 16 ausgebildet ist, erfolgt zunächst über die Mitnehmergeometrie 19 und die Gegenmitnehmergeometrie 20 ein Mitdrehen des Ringfilterelements 4, bis dieses mit seinem Pin 8 in den Leerlaufkanal 9 eingreift. Ab diesem Zeitpunkt wird lediglich noch der Deckel 3 bis in die Endlage verdreht. Bei einem weiteren Zuschrauben des Deckels 3 können nun die Innengewindeabschnitte 15 über ihre Gleitflächen 17 des Außengewindes 13 gleiten und nach radial außen verstellt werden, bis die Innengewindeabschnitte 15 das Außengewinde 13 wieder hintergreifen und die Federelemente 14 nach radial innen zurückfedern.

Alternativ zu diesem Montagevorgang kann selbstverständlich auch zunächst das Ringfilterelement 4 im Filtergehäusetopf 2 positioniert und erst anschließend der Deckel 3 aufgeschraubt werden. Die korrekte Position des Pins 8 wird dabei nicht nur über die Mitnehmergeometrie 19 sondern auch über die Geometrie der Innengewindeabschnitte 15 und des Außengewindes 13 erreicht. Bei einem weiteren Zuschrauben des Deckels 3 können nun die Innengewindeabschnitte 15 über ihre Gleitflächen 17 des Außengewindes 13 gleiten und nach radial außen verstellt werden, bis die Innengewindeabschnitte 15 das Außengewinde 13 wieder hintergreifen und die Federelemente 14 nach radial innen zurückfedern.

Eine Demontage des Ringfilterelements 4 aus der Filtereinrichtung 1 erfolgt durch ein einfaches Aufschrauben des Deckels 3, wobei durch das zum zweiten Gewinde 16 gegenläufige erste Gewinde 11 ein Hochziehen des Ringfilterelements 4 und damit ein Herausziehen des Pins 8 aus dem Leerlaufkanal 9 bewirkt wird. Durch die keilförmige Geometrie sowohl des Außengewindes 13 als auch der Innengewindeabschnitte 15 verhaken sich diese beiden Gewindeabschnitte und ermöglichen ein zuverlässiges und dennoch kraftarmes Herausziehen des Ringfilterelements 4.

Um eine langandauernde und qualitativ hochwertige Filterleistung gewährleisten zu können, wirkt die Mitnehmergeometrie 19 und die Gegenmitnehmergeometrie 20 sowie das Außengewinde 13 und die Innengewindeabschnitte 15 der Federelemente 14 in der Art eines Schlüssel-Schloss-Prinzips zusammen, so dass ausschließlich Ringfilterelemente 4 mit passender Mitnehmergeometrie 19 und passendem Außengewinde 13 mit dem Deckel 3 verbunden und in die Filtereinrichtung 1 eingesetzt werden können.

## Patentansprüche

1. Filtereinrichtung (1) mit einem einen Filtergehäusetopf (2) und einen damit verschraubbaren Deckel (3) aufweisenden Filtergehäuse sowie mit einem darin angeordneten Ringfilterelement (4) mit einem axial abstehenden Pin (8) zum Verschließen eines Leerlaufkanals (9),
**dadurch gekennzeichnet,**
- **dass** das Ringfilterelement (4) über eine erstes Gewinde (10) mit dem Deckel (3) verbunden ist,
- **dass** das erste Gewinde (10) einen von einer oberen Endscheibe (5) des Ringfilterelements (4) zentrisch und axial abstehenden Dom (11) mit einem durch Freigänge (12) unterbrochenen Außengewinde (13) und von dem Deckel (3) axial abstehende und hohlzylindrisch angeordnete Federelemente (14) aufweist, an denen jeweils ein komplementär zum Außengewinde (13) ausgebildeter Innengewindeabschnitt (15) angeordnet ist,
- **dass** sich jeder Innengewindeabschnitt (15) über einen längeren Umfangsabschnitt erstreckt als ein Freigang (12),
- **dass** das erste Gewinde (10) gegenläufig zu einem zwischen dem Filtergehäusetopf (2) und dem Deckel (3) angeordneten zweiten Gewinde (16) ausgebildet ist.

2. Filtereinrichtung nach Anspruch 1,
**dadurch gekennzeichnet,**
**dass** insgesamt acht Federelemente (14) mit jeweils einem Innengewindeabschnitt (15) vorgesehen sind.

3. Filtereinrichtung nach Anspruch 1 oder 2,
**dadurch gekennzeichnet,**
**dass** das Außengewinde (13) insgesamt sechs Freigänge (12) aufweist.

4. Filtereinrichtung nach einem der Ansprüche 1 bis 3,
**dadurch gekennzeichnet,**
**dass** der Dom (11) und das Außengewinde (13) mit seinen Freigängen (12) einstückig mit der oberen Endscheibe (5) ausgebildet sind.

5. Filtereinrichtung nach einem der Ansprüche 1 bis 4,
**dadurch gekennzeichnet,**
**dass** das erste Gewinde (10) als Linksgewinde und das zweite Gewinde (16) als Rechtsgewinde ausgebildet sind.

6. Filtereinrichtung nach einem der Ansprüche 1 bis 5,
**dadurch gekennzeichnet,**
**dass** an einer Stirnseite (18) des Doms (11) eine Mitnehmergeometrie (19) angeordnet ist, die derart mit einer deckelseitigen Gegenmitnehmergeometrie (20) zusammenwirkt, dass das Ringfilterelement (4) beim Montieren des Deckels (3) solange mit dreht, bis der Pin (8) in den Leerlaufkanal (9) eingreift.

7. Filtereinrichtung nach einem der Ansprüche 1 bis 6,
**dadurch gekennzeichnet,**
**dass** die Filtereinrichtung (1) als Kraftstofffilter oder als Schmierstofffilter ausgebildet ist.

8. Ringfilterelement (4) für eine Filtereinrichtung (1) nach einem der vorhergehenden Ansprüche, mit
- einem axial und exzentrisch abstehenden Pin (8),
- einem von einer oberen Endscheibe (5) zentrisch und axial abstehenden Dom (11) mit einem durch Freigänge (12) unterbrochenen Außengewinde (13).

9. Ringfilterelement nach Anspruch 8,
**dadurch gekennzeichnet,**
**dass** das Außengewinde (13) zumindest zwei Freigänge (12), vorzugsweise sechs Freigänge (12), aufweist.

10. Ringfilterelement nach Anspruch 8 oder 9,
**dadurch gekennzeichnet,**
**dass** der Dom (11) und das Außengewinde (13) mit seinen Freigängen (12) einstückig mit der oberen Endscheibe (5) ausgebildet sind.

## Claims

1. A filter device (1) having a filter housing with filter housing pot (2) and with a cover (3) that can be screwed onto the latter, and having an annular filter element (4) arranged therein with an axially protruding pin (8) for closing a run-off channel (9),
**characterized in that**
- the annular filter element (4) is connected to the cover (3) via a first thread (10),
- the first thread (10) has a dome (11) protruding centrally and axially from an upper end disc (5) of the annular filter element (4), with an outer thread (13) interrupted by free passages (12), and hollow cylindrical spring elements (14) which protrude axially from the cover (3) and on which an inner thread portion (15) designed to complement the outer thread (13) is arranged,
- each inner thread portion (15) extends over a longer circumferential portion than a free passage (12),
- the first thread (10) is designed running counter to a second thread (16) arranged between the filter housing pot (2) and the cover (3).

2. The filter device according to Claim 1,
**characterized in that**
a total of eight spring elements (14) are provided with respectively an inner thread portion (15).

3. The filter device according to Claim 1 or 2,
**characterized in that**
the outer thread (13) has a total of six free passages (12).

4. The filter device according to one of Claims 1 to 3,
**characterized in that**
the dome (11) and the outer thread (13) with its free passages (12) are formed in one piece with the upper end disc (5).

5. The filter device according to one of Claims 1 to 4,
**characterized in that**
the first thread (10) is formed as a left-hand thread and the second thread (16) as a righthand thread.

6. The filter device according to one of Claims 1 to 5,
**characterized in that**
on a face side (18) of the dome (11) a carrier geometry (19) is arranged, which cooperates with a counter-carrier geometry (20) on the cover side such that the annular filter element (4) on mounting of the cover (3) co-rotates until the pin (8) engages into the run-off channel (9).

7. The filter device according to one of Claims 1 to 6,
**characterized in that**
the filter device (1) is constructed as a fuel filter or as a lubricant filter.

8. An annular filter element (4) for a filter device (1) according to one of the preceding claims, with
- an axially and eccentrically protruding pin (8),
- a dome protruding centrally and axially from an upper end disc (5) with an outer thread (13) interrupted by free passages (12).

9. The annular filter element according to Claim 8,
**characterized in that**
the outer thread (13) has at least two free passages (12), preferably six free passages (12).

10. The annular filter element according to Claim 8 or 9,
**characterized in that**
the dome (11) and the outer thread (13) with its free passages (12) are formed in one piece with the upper end disc (5).

## Revendications

1. Dispositif de filtre (1) avec un boîtier de filtre présentant un pot de logement de filtre (2) et un couvercle (3) vissable avec celui-ci ainsi qu'avec un élément de filtre annulaire (4) agencé dedans avec une goupille (8) dépassant en saillie axialement pour la fermeture d'un canal de vidange (9),
**caractérisé en ce**
- **que** l'élément de filtre annulaire (4) est raccordé par le biais d'un premier filet (10) au couvercle (3),
- **que** le premier filet (10) présente un dôme (11) dépassant axialement et centralement d'un disque d'extrémité supérieur (5) de l'élément de filtre annulaire (4) avec un filet extérieur (13) interrompu par des spires libres (12) et des éléments de ressort (14) agencés de manière creuse et cylindrique et dépassant axialement du couvercle (3), sur lesquels respectivement une section de filet intérieur (15) réalisée de manière complémentaire au filet extérieur (13) est agencée,
- **que** chaque section de filet intérieur (15) s'étend sur une section périphérique plus longue qu'une spire libre (12),
- **que** le premier filet (10) est réalisé en sens inverse à un second filet (16) agencé entre le pot de logement de filtre (2) et le couvercle (3).

2. Dispositif de filtre selon la revendication 1,
**caractérisé en ce**
**que** dans l'ensemble huit éléments de ressort (14) sont prévus avec respectivement une section de filet intérieur (15).

3. Dispositif de filtre selon la revendication 1 ou 2,
**caractérisé en ce**
**que** le filet extérieur (13) présente dans l'ensemble six spires libres (12).

4. Dispositif de filtre selon l'une quelconque des revendications 1 à 3,
**caractérisé en ce**
**que** le dôme (11) et le filet extérieur (13) sont réalisés avec ses spires libres (12) d'un seul tenant avec le disque d'extrémité supérieur (5).

5. Dispositif de filtre selon l'une quelconque des revendications 1 à 4,
**caractérisé en ce**
**que** le premier filet (10) est réalisé en tant que filet gauche et le second filet (16) est réalisé en tant que filet droit.

6. Dispositif de filtre selon l'une quelconque des revendications 1 à 5,
**caractérisé en ce**
**qu'**une géométrie d'entraîneur (19) est agencée sur un côté frontal (18) du dôme (11), laquelle coagit avec une géométrie d'entraîneur antagoniste (20) côté couvercle de telle manière que l'élément de filtre annulaire (4) tourne lors du montage du couvercle (3) jusqu'à ce que la goupille (8) se mette en prise dans le canal de vidange (9).

7. Dispositif de filtre selon l'une quelconque des revendications 1 à 6,
**caractérisé en ce**
**que** le dispositif de filtre (1) est réalisé en tant que filtre à carburant ou en tant que filtre à lubrifiant.

8. Elément de filtre annulaire (4) pour un dispositif de filtre (1) selon l'une quelconque des revendications précédentes, avec
- une goupille (8) dépassant en saillie axialement et excentriquement,
- un dôme (11) dépassant axialement et centralement d'un disque d'extrémité supérieur (5) avec un filet extérieur (13) interrompu par des spires libres (12).

9. Elément de filtre annulaire selon la revendication 8,
**caractérisé en ce**
**que** le filet extérieur (13) présente au moins deux spires libres (12), de préférence six spires libres (12).

10. Elément de filtre annulaire selon la revendication 8 ou 9,
**caractérisé en ce**
**que** le dôme (11) et le filet extérieur (13) avec ses spires libres (12) sont réalisés d'un seul tenant avec le disque d'extrémité supérieur (5).
